**Europäisches Patentamt**

**European Patent Office**

**Office européen des brevets**

(19)

(11) **EP 1 288 830 A1**

(12) **EUROPEAN PATENT APPLICATION**

(43) Date of publication:
**05.03.2003 Bulletin 2003/10**

(51) Int Cl.$^7$: **G06F 17/60**

(21) Application number: **02255794.6**

(22) Date of filing: **20.08.2002**

| | |
|---|---|
| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventors: • **Vora, Poorvi L.** **Corvallis, OR 97333 (US)** • **Knapp, Verna E.** **Monmouth, OR 97361 (US)** |
| (30) Priority: **31.08.2001 US 944739** **12.10.2001 US 976637** **15.03.2002 US 99446** | (74) Representative: **Jackson, Richard Eric et al Carpmaels & Ransford, 43 Bloomsbury Square London WC1A 2RA (GB)** |
| (71) Applicant: **Hewlett-Packard Company Palo Alto, CA 94304 (US)** | |

(54) **Anonymous processing of usage rights with variable degrees of privacy and accuracy**

(57)     A computer-readable medium (212) and method for processing usage rights is disclosed. The medium (212) includes information that identifies a secret share of a finite set of secret shares, the secret share being a member of at least one set of secret shares, the finite set of secret shares collectively defining an entity identification associated with an entity (202). The medium (212) further includes at least one voucher associated with the secret share, the at least one voucher corresponding to the entity and the at least one voucher comprising at least one usage right. The disclosure further includes a commerce system that makes use of the method for processing usage rights.

**FIG.2**

EP 1 288 830 A1

**Description**

CROSS-REFERENCE TO RELATED APPLICATIONS

This application is a continuation-in-part of prior U.S. Patent Application Serial No. 09/976637, filed October 12, 2001, which is a continuation-in-part of prior U.S. Patent Application Serial No. 09/944739, filed August 31, 2001. This application is also related to another U.S. Patent Application having Attorney Docket Number 10019037-1, entitled ANONYMOUS RECOMMENDATION TECHNIQUE WITH VARIABLE DEGREES OF PRIVACY AND ACCURACY filed on this date herewith by Vora et al., the same inventors as in the present application.

FIELD OF THE INVENTION

The present invention relates generally to electronic commerce systems and, in particular, to a technique for processing usage rights with varying degrees of privacy versus accuracy within such electronic commerce systems.

BACKGROUND OF THE INVENTION

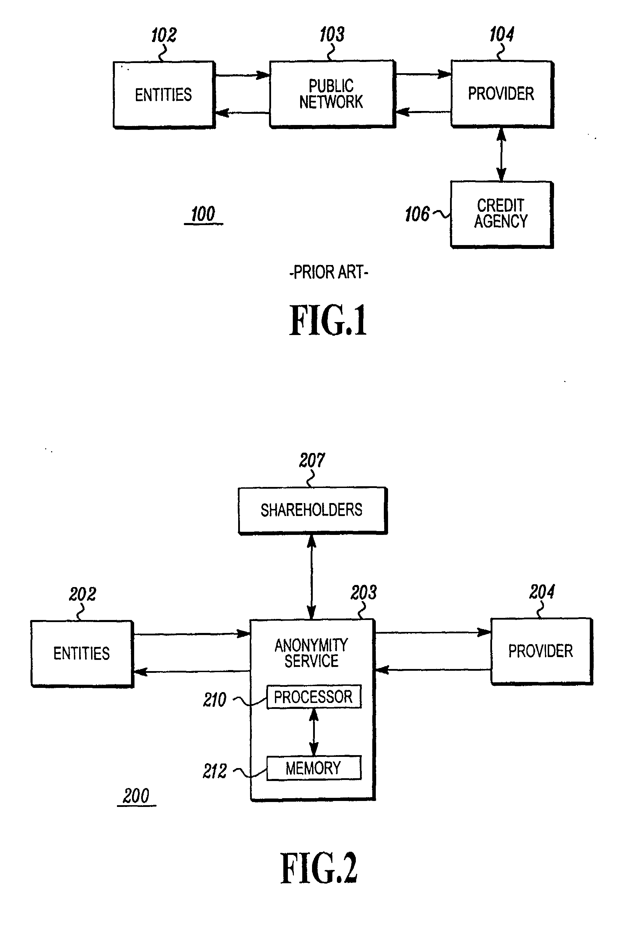

Electronic commerce is increasingly becoming a part of everyday life. In particular, the rapid growth of the Internet and World Wide Web has led to a corresponding increase in the ability to acquire goods and services remotely. A generalized example in accordance with current techniques is illustrated in FIG. 1. In particular, an entity 102, such as an individual or organization, may communicate with a provider 104 via a public network 103. The entity 102 transmits a variety of information to the provider 104 in order to acquire a product being offered by the provider 104. The information sent by the entity 102 typically comprises an identification of the entity, an identification of the product being acquired and, optionally, information regarding the price of the product being acquired. In turn, where the acquisition is a purchase, the provider 104 may supply some or all of the information from the entity 102 to a credit agency 106. As a result, the provider 104 has specific knowledge of the products being purchased by the entity 102. Likewise, the credit agency 106 has specific knowledge that the entity 102 is purchasing products from the provider 104.

Additionally, when a digital product such as digital music, an electronic book, digital video, etc., are sold to an entity, they are often encrypted to prevent copying. The entity often requires special software to use (view, listen, instantiate, etc.) the product, and the special software holds the key to decrypt the asset. In this manner, the software can be used to control the kind of access the entity can have to the product. For example, an entity might have paid only enough to view a document, and not to copy it, or the entity might have paid to listen to a music file no more than fifteen times. Sometimes, the list of access rights to which an entity is entitled are listed in a Voucher'; which is read by the special software and ideally cannot be changed by the consumer. The location and use of such vouchers presents a privacy versus security dilemma often encountered in electronic commerce. That is, if the voucher is stored on a network server, thereby minimizing the possibility that the entity will be able to modify the voucher in an unauthorized manner, security (in the sense that the entity will not be able to use the product in a fashion exceeding the rights rightfully obtained) is arguably enhanced. However, in order to use the product, the entity must access the voucher on the server which thereby provides an opportunity for the individual or organization operating the server to ascertain the entity's activities, i.e., how the entity is using the product, which raises obvious privacy concerns. On the other hand, the voucher could be stored locally to the entity, thereby allowing the entity to use the product without having to first seek permission from a server and thus enhancing privacy. However, as noted above, this provides the entity with greater opportunity to tamper with the voucher and thereby obtain greater rights than originally obtained.

Therefore, a need exists for techniques that allow the rights listed in vouchers to be managed in a secure fashion without undue invasion of the privacy of entities that rightfully obtain those rights.

BRIEF DESCRIPTION OF THE DRAWINGS

    FIG. 1 is a block diagram illustrating a typical arrangement used in electronic commerce in accordance with prior art techniques.
    FIG. 2 is a block diagram illustrating an arrangement that may be used for electronic commerce in accordance with the present invention.
    FIG. 3 is a flow chart illustrating a technique in accordance with one embodiment of the present invention.
    FIG. 4 is a flow chart illustrating a technique in accordance with another embodiment of the present invention.
    FIGS. 5-12 illustrate an example of processing usage rights in accordance with an embodiment of the present invention.

DETAILED DESCRIPTION OF THE PREFERRED EMBODIMENT

The present invention provides a technique for processing usage rights corresponding to entities in an electronic commerce system (based, for example, on the Internet or World Wide Web) while simultaneously providing a level of secrecy as to those entities'use of such usage rights. In general, the present invention provides a technique where security concerning usage rights varies inversely relative to privacy, and vice versa. In the context of the present invention, usage rights encompass substantially all actions that an entity may take relative to a digital object with the permission of the provider of the digital object. Furthermore, electronic commerce systems as used herein are not limited to systems supporting commercial transactions, but instead encompass all systems whereby an entity at least provides its entity identification to a third party for any purpose.

The present invention employs secret sharing techniques whereby information regarding usage rights and their use by an entity are kept confidential and yet accessible when required to verify a particular use by the entity. An entity acquiring usage rights in a digital object through the electronic commerce systems supplies data such as an entity identification to an anonymity service. In turn, the anonymity service splits the entity identification into a plurality of secret shares that are thereafter provided to a corresponding plurality of shareholders. The nature of the secret splitting process is such that each shareholder is unable to reproduce the secret corresponding to the shareholder's share without the other shareholders involved in the process. Furthermore, the process whereby the secret shares are generated should be reproducible by the anonymity service, such that the anonymity service can generate all the sets of the plurality of secret shares ever generated for a particular entity identification. Information regarding the specific usage rights is associated with each secret share of the plurality of secret shares used to memorialize the entitys identity. This information may be represented in the form of a voucher (compilation of all rights allowed to an entity as part of a transaction) or in the form of individual rights. Assuming that there are a finite number of secret shares available from which any given entity's plurality of secret shares may be selected, over time and multiple usage rights acquired by multiple entities, at least some secret shares will have associated therewith one or more vouchers or allowed usage rights corresponding to a plurality of entities.

The present invention requires the categorization of each share of the plurality of secret shares defining the entity as a tag-holding or non-tag-holding share. It also provides for the use of tags that are based on information that is substantially uniquely associated with individual entities for tag-holding shares. In one embodiment of the present invention, tags are based, at least in part, upon at least a portion of a plurality of secret shares representative of each entity's identity. For example, a one-way hash function may be used to create tags based on the secret shares for a given entity. Thereafter, the tags are also associated with corresponding tag-holding secret shares and the information regarding the specific usage rights. Because the hash function is preferably non-reversible, shareholders in possession of a secret share and corresponding tag are not able, without substantial difficulty, to discern the identity of the entity corresponding thereto. Although collaborating shareholders could combine information regarding secret shares and tags in order to discern some information about a corresponding entity, the additional identification characteristics of the tag allow more accurate determinations of available usage rights to be made. This is the tradeoff the present invention exploits; provide greater accuracy in determining available usage rights at the expense of lesser privacy. The performance characteristics of the hash function used determine the degree of privacy lost in exchange for greater accuracy. In another embodiment of the present invention, there are no tag-holding shares (i.e. all shares are non-tag-holding) and this provides maximum privacy.

When it is desired to verify the availability of a given usage right for an entity based on that entity's stored vouchers or usage rights, shareholders of the tag-holding secret shares for the given entity are queried as to tags in their possession associated with the corresponding secret share for the entity and having associated therewith the given usage rights. Stated another way, each holder of a tag-holding share is asked to scan the vouchers or usage rights in its possession to identify which tags, associated with the shareholder's tag-holding secret share, are also associated with the given right. In response, the shareholders provide the identified tags to the anonymity service. In parallel, the anonymity service determines a set of verification tags using the same technique used to generate the tags stored by the holders of tag-holding shares. In parallel also, shareholders of non-tag-holding shares are queried as to whether a certain share value has a usage right associated with it. Note that the same set of secrets may not be generated each time for a given entity identification, hence the same set of tags also may not be generated each time. However, the present invention requires that one of a finite set of sets of secret share values and, for tag-holding shares, corresponding tags, is generated each time.

The set of verification tags for tag-holding shares consists of all the possible tags associated with the different sets of secret share values, with an association between a tag and the corresponding secret share value and the corresponding set of secret share values for all shareholders. It is then determined whether the verification tags are found among the identified tags so as to be consistent with associated tag-holding secret share values and sets of tag-holding secret shares. If so, and if the responses from all non-tag-holding shares are affirmative, then the given usage right is available to the entity; if not, the given usage right is not available to the entity. By associating vouchers, and their constituent usage rights, with a plurality of secret shares (tag-holding and non-tag-holding), and tags corresponding to tag-holding shares, if any, the present invention facilitates anonymous transactions, particularly anonymous processing of usage rights with selectable degrees of accuracy.

In an embodiment providing a lesser degree of privacy, the verification tags are generated before sending a verification request. Thereafter, a secret share and corresponding verification tag is sent to each shareholder along with an identification of the usage right(s) in question. In this manner, the verification process is more efficient because shareholders need only respond with an affirmative message if the usage right(s) is(are) found to be associated with the secret share and corresponding tag. This process is performed for each set of verification tags corresponding to each set of secret share values for a given entity identity.

In an embodiment providing maximum privacy all shares are non-tag-holding (no shares are tag-holding). Each shareholder associates usage rights with the share value corresponding to the entity. During verification, the share value and the usage right are sent to the shareholder, who responds in the affirmative if the usage right is associated with the share value, and in the negative if not. Another embodiment also has no tag-holding shares, but in the verification process a shareholder is queried about the usage rights associated with a given share value. The rights associated with all share values corresponding to the entity are intersected, and if the particular usage right is in the intersection, it is considered a legitimate usage right of the entity.

The present invention is characterized in that if an entity has been accorded a usage right, the availability of that right will always be confirmed. Any potential inaccuracies in the confirmation of available usage rights will always err in favor of the entity that may not otherwise be entitled to a certain usage right. Stated another way, an entity will never be denied a usage right that has been properly acquired, but could, in certain circumstances described in greater detail below, be granted a usage right that had not been previously acquired. As a result, entities would be less inclined to sacrifice privacy for the sake of accuracy when any inaccuracies would inure to their benefit. However, implementations of systems in accordance with the present invention can be designed to minimize such inaccuracies, thereby protecting the interests of parties that grant usage rights, while still providing significant privacy protection.

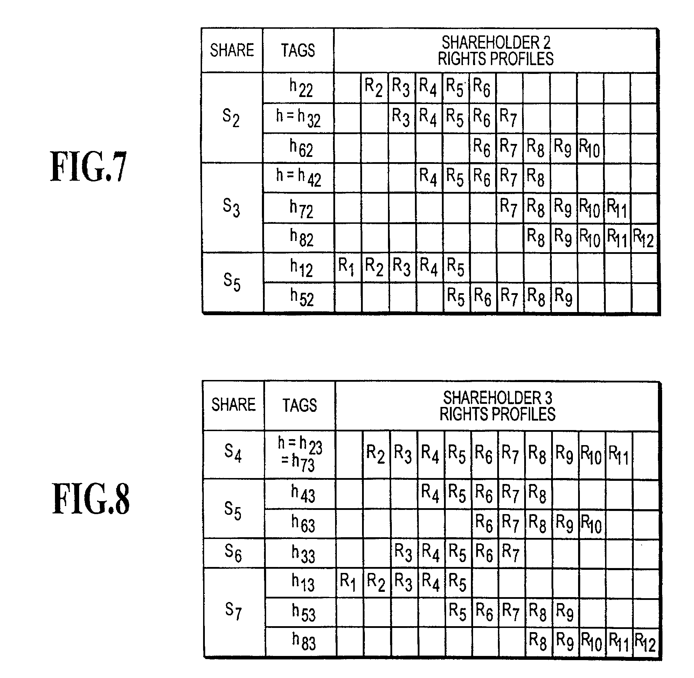

The present invention may be more readily described with reference to FIGS. 2-12. Referring now to FIG. 2, there is illustrated a block diagram of a system 200 in accordance with the present invention. In particular, an anonymity service 203 is provided as an intermediary between entities 202 (e.g., acquirers of services or digital products) and one or more providers 204. In practice, the anonymity service 203 and provider 204 can be in communication with a clearing house and a credit agency in support of commercial transactions; for clarity, the clearing house and credit agency are not illustrated in FIG. 2. A technique incorporating the use of a clearing house and credit agency in electronic commerce transactions that provides anonymity in such transactions is disclosed in co-pending U.S. Patent Application Serial No. 09/944,739, filed August 31, 2001, the teachings of which application are incorporated herein by this reference. Although direct connections are illustrated between the anonymity service 203 and the various other elements of the system 200, it is understood that these connections may comprise paths established through public networks such as the Internet or World Wide Web, within private networks or through a combination of public and private networks.

In the context of the present invention, each of a plurality of entities 202 may comprise any individual or organization capable of acquiring usage rights associated with digital products via the electronic commerce system 200. In the context of the present invention, digital products comprise anything capable of delivery via a communication network. For example, digital products may include downloadable software or digital data such as text, audio, video or images. Those having ordinary skill in the art will recognize that other types of digital products may be used in conjunction with the present invention, and the present invention is not limited in this regard.

In conjunction with at least some of the digital products, the present invention assumes the use of so-called vouchers associated with such digital products. Each voucher serves as a listing of the usage rights or permissions granted or available to a given acquirer of a digital product. Usage rights, in turn, set forth those activities that the acquiring entity may engage in relative to the digital product and are typically dependent upon the particular nature of the digital product. For example, for a digital product comprising a movie, the usage rights may comprise the right to view the movie a certain number of times, or the right to copy the movie onto more than one hard drive. Conversely, for a digital product embodied as a service, the usage rights may comprise the right to access the service a certain number of times or during a limited window of time. Those having ordinary skill in the art will recognize a variety of such rights may exist depending on the nature of the digital product.

In practice, various levels of usage rights are typically available to an acquiring entity, depending on how much money the acquiring entity is willing to spend or, more generally, how much consideration the acquiring entity is willing to convey in exchange for the digital product and its associated usage rights. For example, relative to a given digital product, the available universe of rights that an entity may acquire are rights to view, copy and modify the product. For a relatively low fee, the entity may acquire the right to view the product, but nothing more. For a higher fee, the entity may be allowed to copy the product in addition to viewing it. Finally, for the highest fee, the additional right to modify the product may also be obtained. Although this example sets forth specific rights (view, copy, modify) for illustrative purposes, it is understood that, in general, a greater or lesser number of rights may be available depending upon the nature of the digital product being acquired.

In practice, each entity 202 communicates with the anonymity service 203 via a computer implementing a network communication program, such as a browser or the like. The provider 204, in turn, may likewise comprise any individual or organization that provides services or digital products or that accepts information from entities via a communication network. More generally, the provider 204 may comprise any individual or organization that is the intended target of an entity's action(s) and is therefore a recipient of that entity's identification. In return, the provider 204 grants one or more usage rights, preferably in the form of a voucher, to the entities 202 via the anonymity service 203. The anonymity service 203 preferably comprises a computer-implemented service available via a communication network such as the Internet or World Wide Web. As depicted in FIG. 2, the anonymity service 203 preferably comprises a processor 210 and memory 212. For example, the anonymity service may be implemented using one or more network servers executing stored software routines as known in the art.

The anonymity service 203 is in communication with a plurality of shareholders 207. As described in greater detail below, each of the shareholders 207 is provided with a secret share (preferably representative of at least an entity's identification) which, by itself, does not enable an individual shareholder to reconstruct a secret, i.e., an entity's identity. In a preferred embodiment, the process used to generate the secret shares is reproducible; that is, for any given input, a predictable set of secret shares will be provided as output. Furthermore, it is preferred that the process used to generate the secret shares possess the property that any secret share is equally likely to take on a particular value as any other value. For example, if secret shares are expressed as n-bit binary words, there exists a finite set of secret share values comprising $2^n$ possible values. Thus, the likelihood of any one secret share value of the finite set of secret share values being generated is preferably equivalent to $\frac{1}{2^n}$.

The set of shareholders 207 is preferably static relative to the anonymity service 203 and to the number of secret share values in the finite set of secret share values. That is, for a given entity's identification, information corresponding to a given secret share value is always sent to the same shareholder of the set of shareholders 207, which set itself is unchanging from the anonymity service's perspective. For example, if there are ten possible secret shares ($S_1$ through $S_{10}$) and ten possible shareholders ($H_1$ through $H_{10}$), a possible arrangement is to uniquely assign one of the ten secret share values to a corresponding one of the ten shareholders. Further, it is preferable to ensure that the first shareholder always receives the first secret share value produced, the second shareholder always receives the second secret share value produced, and so on. Of course, other arrangements are possible. If multiple anonymity services are provided, each could be associated with its own, well-described and not necessarily static, plurality of shareholders, which plurality of shareholders may or may not include shareholders that are also associated with other anonymity services.

In any event, each shareholder is capable of receiving secret shares and information regarding usage rights from the anonymity service 203. To this end, each shareholder preferably comprises a computer-implemented device capable of communicating with the anonymity service 203. Because secret sharing schemes are vulnerable to the extent that separate shareholders could collaborate to ascertain the secret in their possession, it is advantageous to maintain the identity of each shareholder in confidence from the other shareholders. Furthermore, it is preferred to select the shareholders such that they have an inherent reason not to collaborate with each other. For example, shareholders in possession of the secret shares corresponding to a single secret may comprise competitors in a given industry. Such competitors are inherently unlikely or unwilling to share information with each other. Additionally, the shareholders may comprise a privacy organization that is dedicated to advocating privacy in electronic commerce, and therefore unlikely to collaborate with other shareholders. Further still, the entity 202 may comprise one of the shareholders, or the shareholders 207 may be known to the entity 202, such as family members or friends or an Internet mailing list constructed around a common interest.

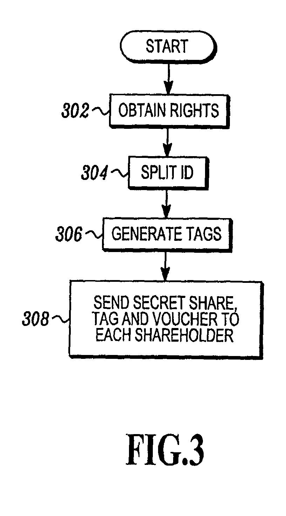

Referring now to FIG. 3, a method in accordance with a first embodiment of the present invention is illustrated. In particular, the method of FIG. 3 is preferably implemented by the anonymity service 203. At block 302, an entity, via the anonymity service, obtains usage rights preferably in the form of a voucher. Typically, the entity will obtain the usage rights as part of the process of acquiring a digital product, as described above. A technique for the anonymous acquisition of digital products is disclosed in co-pending U.S. Patent Application Serial No. 09/944,739, the teachings of which application have previously been incorporated herein. The usage rights are provided by the provider of the digital product. The particular format of the voucher and constituent user rights is a matter of design choice and those having ordinary skill in the art will be familiar with the necessary techniques. Furthermore, the usage rights may be provided in a secure manner, such as through the use of well-known encryption or trusted path techniques.

Assuming that an anonymous acquisition technique has been employed (although it is not a necessity), the provider will have no knowledge of the acquiring entity. However, in acquiring the usage rights, the entity will have provided its entity identification to the anonymity service. In this manner, the anonymity service acts as an intermediary between the entity and the provider. To facilitate this role, the anonymity service can be provided as an additional service by an entity's on-line service provider, such as an Internet Service Provider (ISP). Again, information exchanged between the anonymity service and the entities may be securely transmitted using known techniques, such as encryption or a trusted path. Regardless, the entity identification may comprise any unique identifier such as a public key, credit card number or the like.

Once the usage rights have been obtained, processing continues at b1ock 3Ø4 where a cryptographic or other secret splitting technique is used to split the entity identification into a plurality of secret shares. Such secret splitting techniques are well known in the art. In essence, a secret splitting technique takes a secret and divides it up into pieces such that each piece by itself does not allow a holder of that piece to reconstruct the secret. However, a holder in possession of all of the pieces is able to reconstruct the secret.

The present invention requires well-described and reproducible secret splitting, i.e., a secret splitting technique that results in reproducible sets of secret share values for a given entity identification. A number of cryptographic secret sharing schemes use random number generation and, as a result, the secret share values are generally not reproducible. Typically, in such schemes, a seed value is used to initialize a process that generates a stream of essentially random data, which random data (i.e., the secret shares) is then used to secure other data. Random number generation usually enhances the secrecy of a scheme because a well-defined, predetermined relationship does not exist between the secret share values and the secret, and the shares hence reveal less information about the secret. As a practical matter, however, the present invention cannot be implemented using a secret splitting/sharing scheme that results in secret shares that are different each time for identical inputs. Rather, the present invention is preferably implemented using a secret splitting scheme that generates one of a finite number of possible sets of secret shares each time for identical inputs. The number of possible secret share sets for a given entity identification should be small compared to: (a) the average number of times an entity is expected to use the service, and (b) the total number of sets of secret shares possible (for m n-bit secret shares, this number is $2^{nm}$).

Most of the cryptographic secret sharing schemes that require random numbers can be easily modified for use with the present invention. For example, in one approach, random numbers can be generated once, stored with an entity identification by the anonymity service, and used every time the entity identification is received thereafter. In another approach, the same random number can be used for all entity identities.

However, both of these approaches reduce the secrecy of the schemes. The first approach provides more privacy to the consumer relative to the shareholders because the shareholders have data from only one entity to reverse-engineer in order to obtain information about the corresponding random number and, through it and a single secret share value, information about the entity identification. However, because the first approach requires storage of entity identifications by the anonymity service, (not required by the second approach), it provides severely reduced privacy to the consumer with respect to the anonymity service.

The second approach provides less privacy to the consumer relative to the shareholders because they might be able to analyze patterns of the shares corresponding to different entity identifications to make educated guesses about the single random number, and from that information also determine information about entity identification from a single secret share value. Similar schemes, with the fixed numbers changing every so often, even at random, and being stored against entity identification for later reference, can also be used to provide more privacy to the consumer relative to the shareholders, though these will still be privacy-compromised to some degree with respect to the anonymity service and could decrease accuracy of usage rights availability determinations.

A third approach is for the anonymity service to use a function of the entity identification to generate the random data for that entity identification so that the random data does not have to be stored. The service can thereafter construct the random data each time it is needed. Because each entity identification is presumably unique, the resulting random data will not be the same for all entity identifications, and the function used can be changed occasionally if required. In particular, the function can be randomly chosen from a small, finite set of functions. The scheme could be made more secure if the function were a so-called one-way function, i.e., a function that is easy to compute but difficult to invert. This would make it harder to recover an entity identification from a secret share value. Those having ordinary skill in the art will recognize that other types of permutations may be used to generate reproducible shares in conjunction with the present invention, and the present invention is not limited in this regard.

An exemplary secret sharing scheme that uses random numbers, and its modification for use with the present invention, is now described. As an example of secret sharing, assume that a party A wishes to split a secret S into three shares that will be subsequently given to parties B, C and D. In accordance with a preferred embodiment of the present invention, further assume that the secret S is represented as a string of bits having length M. First, A generates two random bit strings, X and Y, each of length M. (Techniques for generating random bit strings are well known in the art of cryptography and are therefore not described in detail herein.) The secret S is thereafter exclusive-OR'd with X and Y to provide a new bit string Z, also of length M:

$$Z = S \oplus X \oplus Y$$

Thereafter, A provides Z, X and Y (the secret shares) to, for example, B, C and D (the shareholders), respectively. Note that none of B, C or D is able to reconstruct the secret S based solely on their respective share (Z, X or Y). To the contrary, the only way to reconstruct the secret is to combine the secret shares once again:

$$S = Z \oplus X \oplus Y$$

The above-described scheme can be modified to generate reproducible secrets instead of random secrets. Instead of random bit strings, X and Y could be outputs of well-defined functions of the entity identification. For example, X and Y could be squares, cubes, and/or $n^{th}$ powers of the entity identification. Because X and Y would no longer be random, the security of the secret splitting scheme would be reduced. However, this is a cost of obtaining X and Y values that are reproducible. To mitigate the impact on the security, the function can be changed, e.g., to the $m^{th}$ power, after a certain period of time, or it can be a different function depending on parameters such as the day of the week, or it can be a function randomly chosen from a finite set of functions (for example, the function could be one of the 101-105$^{th}$ powers). The total number of different functions used for each entity identification should be small compared to the average number of times each entity identification is used in the anonymity service, and small compared to the total number of sets of secret shares possible. The larger the number of functions, the more privacy is protected from the secret shareholders at the possible expense of accuracy in determining usage rights availability.

While this is a simple example, it illustrates the basic concept and implementation of secret splitting modified for reproducibility. Simple extensions will be evident to those having ordinary skill in the art. For example, a larger number of shareholders may be employed by simply generating additional reproducible bit strings to combine with the secret. One publication teaching a variety of cryptographic secret splitting techniques is "Applied Cryptography" by Bruce Schneier (John Marley & Sons, 1996), the teachings of which are incorporated herein by this reference. Referring back to FIG. 3, the number of secret shares provided at block 304 for the entity identification is a matter of design choice. However, in a preferred embodiment, the number of secret shares is always the same and the secret splitting technique is reproducible, though equivalent outputs may not always result from equivalent inputs.

So-called perfect secret splitting schemes are those schemes that result in secret shares in which any given secret share does not provide any information to an adverse party by which the secret may be identified. A number of known perfect secret sharing schemes result in at least one random secret. Modifying a perfect scheme to produce reproducible shares as described earlier could make the scheme non-perfect.

Besides cryptographic secret splitting schemes, other schemes which require less computation and in which individual secret shares do provide some information regarding the secret may also be used, although are not preferred. A simple illustration of a non-cryptographic secret splitting technique would be to split the secret up into constituent parts and providing those parts as the secret shares directly. For example, if a given entity's identification is simply "John Smith", the secret shares could be provided as the nine letters in the identification, i.e., "j", "o", "h", "n", "s", "m", "i", "t" and "h". While no one secret share (letter) allows a given shareholder to reconstruct the entire secret, it does provide some information about the secret.

The shares are then divided into tag-holding and non-tag-holding shares. The figure describes the most general case assuming the existence of at least one tag-holding share, though the invention covers the possibility of no tag-holding shares. At block 306, additional processing occurs whereby at least one tag corresponding to each tag-holding share for the entity is generated. Broadly, tags in accordance with the present invention comprise any indicia that serves to further identify an entity in addition to the entity identification and the secret shares representative thereof. In one embodiment, the tags are based on the entity identification and, in particular, upon at least a portion of the plurality of secret shares. To this end, a hash function may be employed.

As known in the art, a hash function is a computationally-efficient function, $h$, mapping binary strings of arbitrary length, x, to binary strings of some fixed length, $h(x)$, often referred to as hash values. Generally, hash values serve as a compact representation of the input value. In a typical application, such as a cryptographic use, hash functions that provide an n-bit hash values are ideally designed such that any randomly chosen input string will map to a given hash value with a probability of $2^{-n}$. As described in Handbook of Applied Cryptography by Menezes et al. (CRC Press 1997), Chapter 9, the teachings of which are incorporated herein by this reference, a variety of hash function characteristics are used to describe different categories of hash functions. In particular, a one-way hash function is a function such that finding an input which hashes to a predetermined hash value is difficult, and a collision resistant hash function is a function such that finding any two or more inputs having the same hash value is difficult. For the purposes of the present invention, a one way (or non-invertible) hash function having varying degrees of collision resistance is preferably employed. That is, for purposes of the present invention, a one-way hash function that does map two or more inputs to the same hash value with predictable frequency is preferable. As will be apparent from the discussion below, use of a one-way hash function with a relatively high level of collision resistance (i.e., collisions less likely to occur) will result in greatly improved accuracy when determining the availability of usage rights at the expense of a loss in privacy. Conversely, a one-way hash function with a relatively low level of collision resistance (i.e., collisions more likely to occur) will result in less accuracy with improved privacy. In summary, to the extent that one-way hash functions having varying degrees of collision resistance can be designed, the present invention can provide varying degrees of accuracy in determining availability of usage rights versus privacy. The most privacy, and least accuracy, is provided by no tag-holding shares and no tags (or tags of length zero, where all identical share values collide, and there is no differentiation among entities with the same share values using tags). Note that the price of additional privacy is paid by the source of the usage rights and not by the acquiring entity. The present invention results in a set of usage rights that contains at least all of the original usage rights acquired by the entity. Inaccuracies resulting from increased privacy will result in larger sets of usage rights, which is a cost to the source of the usage rights and a benefit to the acquiring entity.

In a presently preferred embodiment, tags are provided using a one-way hash function as described above operating upon at least a portion of a plurality of secret shares corresponding to a given entity. Let $S_{ij}$ represent the jt'h secret share corresponding to an jt'h entity, where j = 1 to K. For each secret share, a corresponding tag, $h_{ij}$, is determined according to:

$$h_{ij} = h(\text{all } S_{ik} \text{ for } k \neq j, k = 1K \ K)$$

That is, for any given tag-holding secret share of a plurality of secret shares, its corresponding tag is calculated as a hash value based on all of the plurality of secret shares except for the given secret share. Suitable hash functions for this purpose include the so-called Secure Hash Algorithm (SHA1) and Message Digest (MD5) hash functions, although those having ordinary skill in the art will recognize that other hash functions could be employed as a matter of design choice. As noted above, depending on the level of accuracy versus privacy desired, the hash function used should be correspondingly designed to provide a predictable level of collision resistance. Although the example illustrated herein specifies a certain combination of secret shares to use when generating tags, the present invention need not be limited in this regard. For example, a smaller subset of secret shares could be employed. Further still, data other than the secret shares could be used as input to the hash function, for example, the entity identification itself, a different set of secret shares based on the entity identification, or some other piece or collection of information uniquely corresponding to the given entity.

Once generated, the secret shares, their differentiation into tag-holding and non-tag-holding shares, tags corresponding to tag-holding shares, and the information regarding the usage rights (voucher) are provided to the shareholders at block 308. Each shareholder is provided with the corresponding (single) share of the plurality of secret shares associated with the entity, information about whether it is tag-holding or non-tag-holding, at least one tag if it is tag-holding (only the tag corresponding to the single tag-holding share of the plurality of shares associated with the entity), and the usage rights (voucher) associated with the entity. While the secret shares and tags could be sent to the shareholders in encrypted form in order to enhance security, the secret shares and tags are sent unencrypted in a presently preferred embodiment. Likewise, the information regarding the usage rights may be sent in an encrypted form or otherwise secure manner, but this is not preferred.

The length of time required by each shareholder to store a corresponding secret share, tag and voucher is a matter of design choice and may be dictated, for example, by legal requirements setting the length of time documentation regarding a transaction is to be stored. Alternatively, vouchers may be designed to have an expiration date or an unlimited time over which they remain valid. Those having ordinary skill in the art will recognize that other schemes may be possible or desirable. Regardless, once the entity identification has been split and sent to the respective shareholders, the anonymity service discards any copies of the secret. In essence, the anonymity service consumes each secret and distributes the resulting secret shares to corresponding shareholders. An exception to this, albeit not a preferred one, arises where the anonymity service stores the random number associated with a particular entity identification, as described previously.

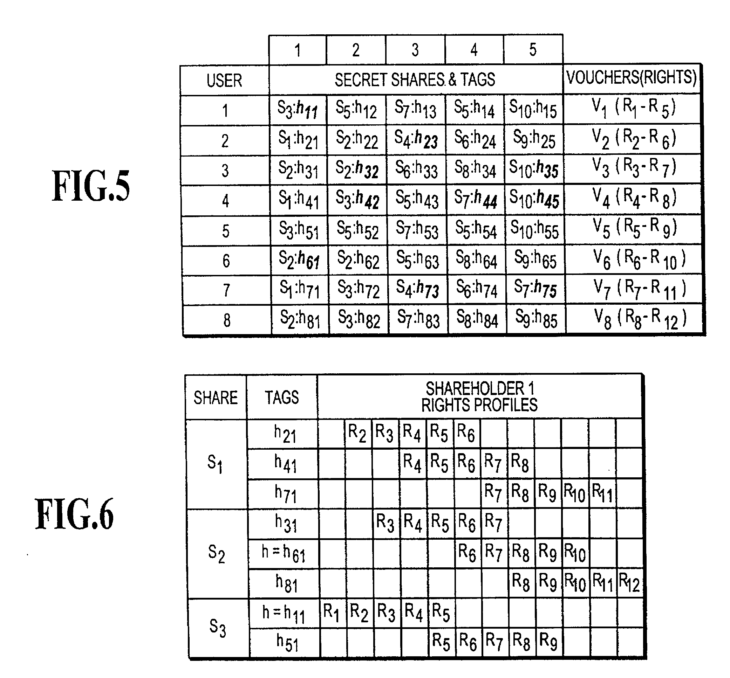

Regardless, the usage rights (or vouchers) sent to all shareholders and the tags sent to each tag-holding shareholder are associated with the secret share by the shareholder. In a preferred embodiment, this is accomplished by each shareholder maintaining one or more profiles of usage rights (or vouchers) in, for example, a computer-readable medium such as a digital memory device or the like. Each shareholder maintains a separate list of usage rights (or vouchers) for each secret share value. An example illustrating this is provided with reference to FIGS. 5 and 6.

FIG. 5 illustrates an exemplary system in which it is assumed that the finite set of secret share values comprises only ten values ($S_1$ through $S_{10}$). The number of possible secret share values in this example has been kept low for ease of illustration; in practice, this number would be substantially larger. Additionally, for ease of illustration, it is further assumed that there are only eight possible vouchers (labeled $V_1$ through $V_8$) each comprising five rights of twelve possible usage rights, labeled $R_1$ through $R_{12}$. It is further assumed that the identification of each entity (user) is split into five secret shares, which five secret shares are equally likely take on any of the ten possible secret share values. Note that the secret share values derived for any given secret may result in multiple occurrences of the same secret share value, e.g., the identification of User 1, when split, results in two instances of the $S_5$ secret share value. Finally, there are five shareholders available to receive, according to a predefined distribution scheme, the five secret shares generated for any given secret. For example, for each secret split into the five secret shares, a first secret share is provided to a first shareholder, a second secret share is provided to a second shareholder and so on. In a preferred embodiment, all shares are tag-holding and the usage rights or vouchers for any given entity are stored in the same profiles to the extent that the secret splitting scheme and tag generation scheme always provide reproducible outputs in response to the given entity's identification or information associated with the given entity, which output causes the entity's usage rights or vouchers to always be sent to the same shareholders for association with the same secret share values and tags. When the secret splitting scheme does not always provide the same output, but provides one of a finite set of outputs, each generated by the use of a different function as described earlier, the usage rights or vouchers will go to different profiles. The example described herein, for ease of illustration, corresponds to the situation where the secret shares generated for a particular entity identity are always the same, and where all secret shares are tag-holding.

In FIG. 5, eight exemplary users are shown and their corresponding secret shares. The column numbers I-5 above the secret share values correspond to the shareholders to which each secret share value is sent. That is, the first column of secret share values sets forth those secret share values sent to the first shareholder; the second column sets forth those secret share values sent to the second shareholder; etc. Additionally, for ease of illustration, each user is assumed to have received only one of the possible eight vouchers. In practice, the number of vouchers obtained by a given entity could be less and, in many instances, would likely be more. Regardless, profiles associated with each secret share value sent to the first shareholder (Shareholder 1) in this example are further illustrated in FIG. 6. Each profile is the result of the vouchers or usage rights acquired by users whose identity, when split according to the secret splitting scheme, results in one of the secret share values shown in FIG. 5. Each profile comprises a tag, $h,$, associated with the corresponding secret share value. For example, note that the $R_3$ right is reflected in each of the $S_1{:}h_{21}$, $S_2{:}h_{31}$ and $S_3{:}h_{11}$ profiles by virtue

of it being included at least in the vouchers of Users 2, 3 and 1, respectively. Furthermore, even though a right is included in the usage rights of multiple users, it is reflected in any given profile only once. Further still, it is assumed that the boldfaced and italicized tag values ($h_{11}$, $h_{61}$, $h_{32}$, $h_{42}$, $h_{23}$, $h_{73}$, $h_{44}$, $h_{35}$, $h_{45}$ and $h_{75}$) are all the identical value, h. Exemplary profiles maintained by each shareholder in the example based on FIG. 5 are shown in each of FIGS. 6-10.

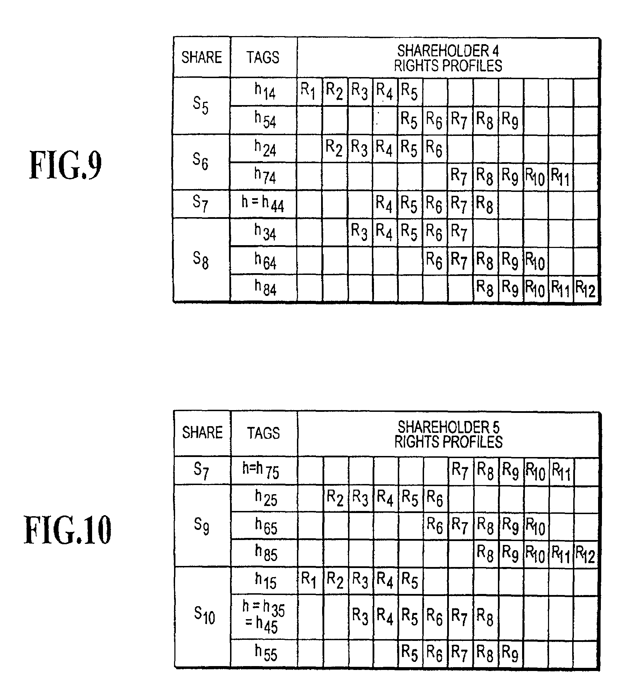

Because, in the preferred embodiment, the hash function used to produce the tags is designed to provide a predictable frequency of collisions, it is possible for identical hash values to be provided in response to different inputs (e.g., secret shares). This is illustrated in FIG. 8 where the $S_4$ secret share has two tags ($h_{23}$ and $h_{73}$) having the same value, h. Likewise, in FIG. 10, the $S_{10}$ secret share has two tags ($h_{35}$ and $h_{45}$) having the same value, h. Note that, in profiles in which no secret share is combined with collided tag values (e.g., FIG. 6), privacy is reduced to the extent that adverse parties can now analyze both the secret share and its corresponding tag to obtain some information about the entity identification and its corresponding usage rights. This would particularly be the case where shareholders collude. For example, with regard to FIGS. 6 and 9, shareholder 1 and shareholder 4 could compare profiles and recognize that their respective share/tag combinations $S_1{:}h_{21}$ and $S_6{:}h_{24}$ have identical usage rights profiles. Now, rather than each having one piece of information (i.e., secret shares) from which to deduce the corresponding entity, each now has two pieces of information (i.e., the secret shares and the corresponding tags) from which to deduce the corresponding entity.

The occurrence of collisions, however, mitigates this loss of privacy. This is illustrated by, for example, the $S_4{:}h_{23}$/$S_4h_{73}$ combinations in FIG. 8. As shown therein, shareholder 3 is in possession of secret share $S_4$ which has associated therewith a single tag, h (in fact corresponding to both Users 2 and 7). This implies that both User 2 and User 7 have the secret share $S_4$ a part of their respective plurality of secret shares and, more significantly, each has the same tag value corresponding to that secret share due to a collision in the hash function. As a result, the profile for this secret share/tag combination includes the usage rights of both User 2 and User 7. In this manner, it is more difficult to determine which usage rights are attributable to which user, thereby conferring a greater degree of privacy. Thus, greater frequency of such occurrences leads to greater protection of privacy. In general, however, this should result in an equivalent loss of accuracy in determining the availability of usage rights for a given entity to the extent that, for the given entity, "spurious" rights are more likely to be included.

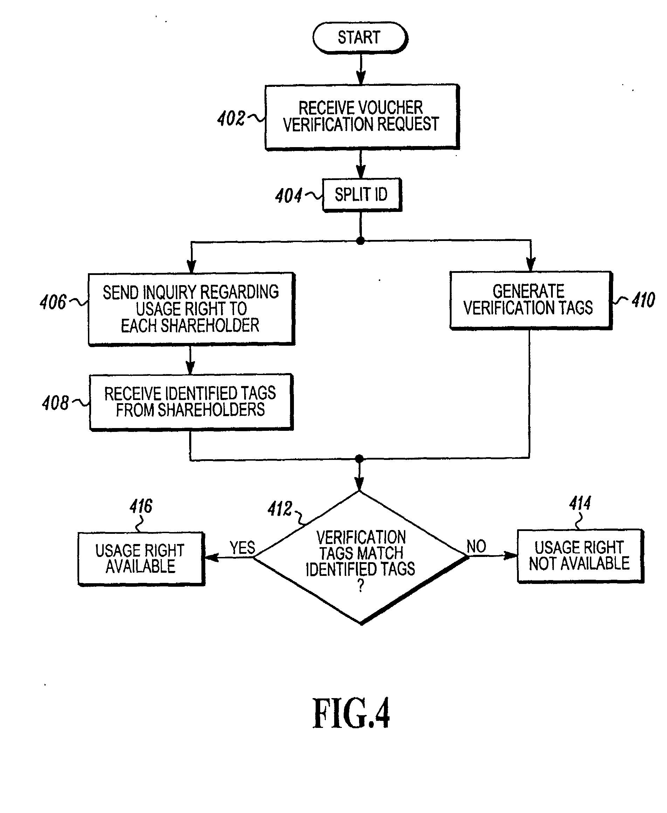

Referring now to FIG. 4, the process of determining whether a certain usage right is available to a given entity is described in further detail. As in FIG. 3, the process illustrated in FIG. 4 is preferably implemented by an anonymity service or the like. At block 402, a voucher verification request is received comprising information identifying at least one usage right to be verified relative to a given entity as determined by an entity identification, also included. The source of the verification request will, in most circumstances, be the entity itself. It is anticipated that, in some circumstances, a party other than the entity itself could act as a source of a verification request. For example, in order to confirm the occurrence of a spurious usage right in favor of an entity, law enforcement or an authorized audit agency may request verification of usage rights.

At block 404, the entity identification is split as described above relative to block 304, with the exception that the entity identification is not discarded after the splitting process has been completed. Thereafter, at block 406, an inquiry is sent to each of the shareholders specifying one of the secret shares generated at block 404 and an inquiry whether the at least one usage right specified in the verification request is associated with the secret share. That is, each shareholder is asked to check its stored profiles and determine if the at least one usage right is present in any of the profiles corresponding to the secret share included in the inquiry. (This presumes that the process of generating the secret shares at block 404 will result in the same set of secret shares as were originally generated for the entity at block 304.) If the shareholder does identify one or more profiles for that share in which the at least one usage right is represented, it responds by sending information regarding the tags associated with such profiles, i.e., the tags identified as being associated with the at least one usage right and the secret share, which information is received at block 408. Because collisions of tags and secret shares can occur, it is possible that, for any given shareholder, the usage right(s) in question may be found in a profile when, in fact, they are not supposed to be available to the entity. While this enhances privacy, if it happens with sufficient frequency (i.e., to a significant number of shareholders), it is possible that an entity will be adjudged as possessing certain rights when, in fact, such rights were never obtained by that entity. Once again, this is the tradeoff of privacy versus accuracy afforded by the present invention. Thus, in general, it is desirable to maximize the frequency of collisions so as to maximize privacy, but only to the point that the occurrence of spurious usage rights is minimized or eliminated.

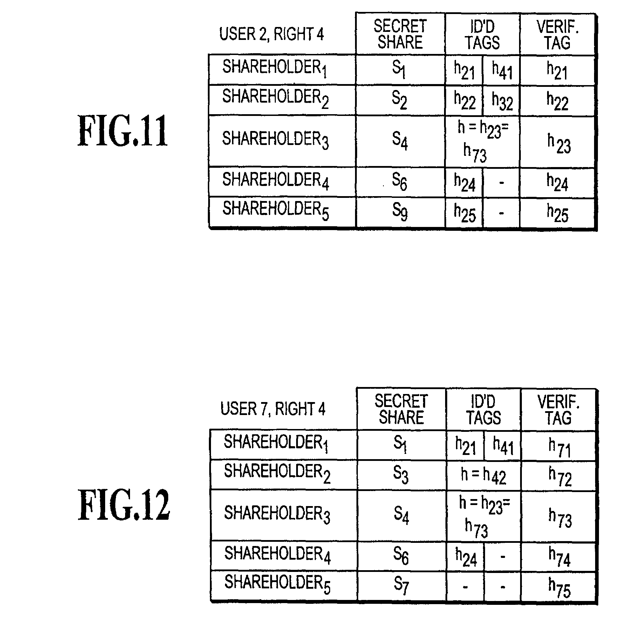

Concurrent with blocks 406 and 408, the tags corresponding to the entity identified in the verification request are generated at block 410. The method used to generate the tags at block 410 should be equivalent to that used at block 306. Thus, for each secret share, corresponding to one of the shareholders, a tag is generated which tag (absent a collision) should correspond uniquely to the entity. Thereafter, at block 412, it is determined whether the verification tags generated at block 410 find a counterpart in the identified tags from block 408. This is illustrated in FIGS. 11 and 12.

Continuing with the example from FIGS. 5-10, FIG. 11 illustrates the identified tags that would be received assuming that the verification request concerned the availability of usage right $R_4$ for User 2, which, as indicated by FIG. 5 should be true. As shown, each of the shareholders responds with at least one tag corresponding to profiles having $R_4$ as a constituent. Note that certain ones of the shares have more than one identified tag, indicating that right $R_4$ was available to other entities having at least some of the same secret share values as those corresponding to User 2, in this case secret shares $S_1$, $S_2$ and $S_4$ corresponding to Users 4, 3 and 7, respectively. In this case, the verification tags corresponding to User 2 match one of the identified tags received from the corresponding shareholder. As a result, referring again to FIG. 4, the usage right would be confirmed as being available to the entity at block 416. At this point, a message can be sent to the entity indicating that the usage right is available, thereby allowing the entity to use the corresponding digital product in accordance with the usage right. The message in this case may comprise a special key or value that enables an application required to use the digital product in accordance with usage right. Until such message is received the application remains disabled with regard to that usage right. In an alternative scenario, the confirmation of the availability of the usage right could be sent to a third party, for example, where it is necessary to perform an audit (such as in a legal proceeding). In this case, the third party, such as a court-appointed agent, could be the source of the verification request and would therefore also be the recipient of the confirmation.

In yet another alternative, rather than using an explicit message confirming the availability of the usage right, a challenge protocol could be used. In this scenario, the application required to use the digital product sends, to the anonymity service, a verification request comprising identification of the requested usage right, the corresponding entity's identification and a value encoded with the anonymity services or the content providers public key. If the usage right is available to the entity, the anonymity service would respond with the decrypted version of the encrypted number, and the application would be able to check that it was the number it had sent, hence it would know that the authorized party had responded.

An illustration of a usage right being unavailable to an entity is illustrated in FIG. 12 concerned the availability of usage right $R_4$ for User 7, which, as indicated by FIG. 5 should not be true. Thus, one would expect that none of the identified tags returned by the shareholders would match any of the verification tags. In this example, shareholder 1 returns identified tags $h_{21}$ and $h_{41}$ associated with secret share $S_1$; shareholder 2 returns identified tag $h = h_{42}$ associated with secret share $S_3$; and shareholder 4 returns identified tag $h_{24}$ associated with secret share $S_6$. Note also that the occurrence of tag collisions results in identified tags h = $h_{23} = h_{73}$ associated with secret share $S_4$ being returned by shareholder 3. Thus, looking only at shareholder 3's identified tags, it would appear that User 7 does have right $R_4$ available because the verification tag corresponding to shareholder 3 is found in the identified tags. Indeed, if similar collisions occurred with each of the other four shareholders, thereby resulting in identified tags matching the verification tags in each instance, the availability of right $R_4$ to User 7 would be indicated as true, i.e., an inaccuracy would result. However, if the function used to generate the tags is chosen to limit this occurrence, then, as shown in FIG. 12, the identified tags returned by at least one of the other shareholders will fail to include a match for at least one of the verification tags. As a result, referring again to FIG. 4, a message can be sent to the entity indicating that the usage right is not available at block 414, thereby preventing the entity from using the corresponding digital product in accordance with the usage right.

In the foregoing specification, the invention has been described with reference to specific embodiments. However, those of ordinary skill in the art will appreciate that various modifications and changes can be made without departing from the scope of the present invention as set forth in the claims below. Accordingly, the specification and figures are to be regarded in an illustrative rather than a restrictive sense, and all such modifications are intended to be included within the scope of present invention. For example, secure multi-party computing could be used in place of the anonymity service. That is, rather than a single third party managing anonymous transactions, a distributed model may be employed. As known in the art, secure multi-party computation involves computing a function of many variables where many parties each provide one or more variables. For example, secret shares of public keys may be used to encrypt and decrypt data without reconstructing the public key. Thus, in the context of the present invention, the shareholders themselves may implement functions described above as being implemented by the anonymity service (if the shareholders are known to each other) using known techniques.

Furthermore, as mentioned previously, another embodiment is to generate the verification tags prior to requesting the shareholders to check the profiles of usage rights or vouchers. The shareholders are then asked to check their profiles for a combination of secret share, usage right and tag, and to respond with a "yes" if the combination appears. Although this embodiment is not as secure, it potentially reduces the amount of information that would have to be exchanged by the shareholders.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential features or elements of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A computer-readable medium (212) having stored thereon a data structure comprising:

   information identifying a secret share of a finite set of secret shares, the secret share being a member of at least one set of secret shares, the finite set of secret shares collectively defining an entity identification associated with an entity (202); and
   at least one voucher associated with the secret share, the at least one voucher corresponding to the entity and the at least one voucher comprising at least one usage right.

2. The computer-readable medium (212) of claim 1, wherein the information identifying a secret share of a finite set of secret shares is associated with information identifying the secret share as a tag-holding share or a non-tag-holding share,
   wherein at least one of the set of secret shares is a tag-holding share, and
   wherein the tag-holding share has at least one tag associated with the information identifying the at least one of the set of secret shares, wherein the at least one tag is based at least in part upon information associated with a corresponding one entity (202) of a plurality of entities.

3. The computer-readable medium of claim 2, wherein the at least one tag is provided by a non-invertible hash function based on the information associated with the at least one entity (202).

4. In a commerce system (200) comprising a plurality of entities, a method for processing usage rights comprising:

   receiving (302) a voucher comprising at least one usage right, the voucher corresponding to an entity of the plurality of entities;
   splitting (304), without retaining, an entity identification corresponding to the entity (202) into a plurality of secret shares; and
   sending (308) the voucher and at least two of the plurality of secret shares to at least two shareholders, each of the at least two secret shares being associated with a corresponding one of the at least two shareholders,

wherein each shareholder of the at least two shareholders associates each shareholder's corresponding secret share with the voucher.

5. The method of claim 4, further comprising:

receiving (402), from a requesting party, a voucher verification request regarding a usage right and comprising the entity identification; splitting (404) the entity identification into the plurality of secret shares; and sending (406), to each shareholder of the at least two shareholders, a corresponding one of the plurality of secret shares and an inquiry whether the usage right is associated with the corresponding one of the plurality of secret shares.

6. The method of claim 5, further comprising:

receiving, from each shareholder of the at least two shareholders in response to the inquiry, an affirmative or negative response based on whether the usage right is associated with the one of the plurality of secret shares; and if all responses are affirmative, sending, to the requesting party, a message indicating that the usage right is available to the entity (202).

7. The method of claim 6, wherein the requesting party is the entity (202).

8. The method of claim 6, wherein the requesting party is an auditing third party.

9. The method of claim 6, further comprising:

receiving, from a requesting party, a voucher verification request regarding a usage right and comprising the entity identification; splitting the entity identification into the plurality of secret shares; and sending, to each shareholder of the at least two shareholders, a corresponding one of the plurality of secret shares and an inquiry about the usage rights associated with the corresponding one of the plurality of secret shares.

10. The method of claim 9 further comprising:

receiving, from each shareholder of the at least two shareholders in response to the inquiry, a list of rights associated with the one of the plurality of secret shares;

determining if the usage right belongs to each of the lists received from the at least two shareholders; and
sending to the requesting party a message indicating that the usage right is available to the entity if the usage right belongs to each list.

*102*

*103*

*104*

ENTITIES → PUBLIC NETWORK → PROVIDER

*106* CREDIT AGENCY

*100*

-PRIOR ART-

# FIG.1

*207*

SHAREHOLDERS

*202*

*203*

*204*

ENTITIES → ANONYMITY SERVICE → PROVIDER

*210* PROCESSOR

*212* MEMORY

*200*

# FIG.2

START

302 ～ OBTAIN RIGHTS

304 ～ SPLIT ID

306 ～ GENERATE TAGS

308 ～ SEND SECRET SHARE, TAG AND VOUCHER TO EACH SHAREHOLDER

# FIG.3

START

402 → RECEIVE VOUCHER
VERIFICATION REQUEST

404 → SPLIT ID

406 → SEND INQUIRY REGARDING
USAGE RIGHT TO
EACH SHAREHOLDER

410 → GENERATE
VERIFICATION TAGS

408 → RECEIVE IDENTIFIED TAGS
FROM SHAREHOLDERS

416 → USAGE RIGHT
AVAILABLE

412 → VERIFICATION
TAGS MATCH
IDENTIFIED TAGS
?

414 → USAGE RIGHT
NOT AVAILABLE

YES

NO

FIG.4

EP 1 288 830 A1

**FIG.5**

| USER | SECRET SHARES & TAGS | | | | | VOUCHERS(RIGHTS) |
|---|---|---|---|---|---|---|
| | **1** | **2** | **3** | **4** | **5** | |
| 1 | $S_3{:}h_{11}$ | $S_5{:}h_{12}$ | $S_7{:}h_{13}$ | $S_5{:}h_{14}$ | $S_{10}{:}h_{15}$ | $V_1\ (R_1 - R_5)$ |
| 2 | $S_1{:}h_{21}$ | $S_2{:}h_{22}$ | $S_4{:}h_{23}$ | $S_6{:}h_{24}$ | $S_9{:}h_{25}$ | $V_2\ (R_2 - R_6)$ |
| 3 | $S_2{:}h_{31}$ | $S_2{:}h_{32}$ | $S_6{:}h_{33}$ | $S_8{:}h_{34}$ | $S_{10}{:}h_{35}$ | $V_3\ (R_3 - R_7)$ |
| 4 | $S_1{:}h_{41}$ | $S_3{:}h_{42}$ | $S_5{:}h_{43}$ | $S_7{:}h_{44}$ | $S_{10}{:}h_{45}$ | $V_4\ (R_4 - R_8)$ |
| 5 | $S_3{:}h_{51}$ | $S_5{:}h_{52}$ | $S_7{:}h_{53}$ | $S_5{:}h_{54}$ | $S_{10}{:}h_{55}$ | $V_5\ (R_5 - R_9)$ |
| 6 | $S_2{:}h_{61}$ | $S_2{:}h_{62}$ | $S_5{:}h_{63}$ | $S_8{:}h_{64}$ | $S_9{:}h_{65}$ | $V_6\ (R_6 - R_{10})$ |
| 7 | $S_1{:}h_{71}$ | $S_3{:}h_{72}$ | $S_4{:}h_{73}$ | $S_6{:}h_{74}$ | $S_7{:}h_{75}$ | $V_7\ (R_7 - R_{11})$ |
| 8 | $S_2{:}h_{81}$ | $S_3{:}h_{82}$ | $S_7{:}h_{83}$ | $S_8{:}h_{84}$ | $S_9{:}h_{85}$ | $V_8\ (R_8 - R_{12})$ |

**FIG.6**

| SHARE | TAGS | SHAREHOLDER 1 RIGHTS PROFILES | | | | | | | | | | | |
|---|---|---|---|---|---|---|---|---|---|---|---|---|---|
| $S_1$ | $h_{21}$ | | $R_2$ | $R_3$ | $R_4$ | $R_5$ | $R_6$ | | | | | | |
| | $h_{41}$ | | | | $R_4$ | $R_5$ | $R_6$ | $R_7$ | $R_8$ | | | | |
| | $h_{71}$ | | | | | | | $R_7$ | $R_8$ | $R_9$ | $R_{10}$ | $R_{11}$ | |
| $S_2$ | $h_{31}$ | | | $R_3$ | $R_4$ | $R_5$ | $R_6$ | $R_7$ | | | | | |
| | $h = h_{61}$ | | | | | | $R_6$ | $R_7$ | $R_8$ | $R_9$ | $R_{10}$ | | |
| | $h_{81}$ | | | | | | | | $R_8$ | $R_9$ | $R_{10}$ | $R_{11}$ | $R_{12}$ |
| $S_3$ | $h = h_{11}$ | $R_1$ | $R_2$ | $R_3$ | $R_4$ | $R_5$ | | | | | | | |
| | $h_{51}$ | | | | | $R_5$ | $R_6$ | $R_7$ | $R_8$ | $R_9$ | | | |

**FIG.7**

| SHARE | TAGS | SHAREHOLDER 2 RIGHTS PROFILES | | | | | | | | | | | |
|---|---|---|---|---|---|---|---|---|---|---|---|---|---|
| $S_2$ | $h_{22}$ | | $R_2$ | $R_3$ | $R_4$ | $R_5$ | $R_6$ | | | | | | |
| | $h = h_{32}$ | | | $R_3$ | $R_4$ | $R_5$ | $R_6$ | $R_7$ | | | | | |
| | $h_{62}$ | | | | | | $R_6$ | $R_7$ | $R_8$ | $R_9$ | $R_{10}$ | | |
| $S_3$ | $h = h_{42}$ | | | | $R_4$ | $R_5$ | $R_6$ | $R_7$ | $R_8$ | | | | |
| | $h_{72}$ | | | | | | | $R_7$ | $R_8$ | $R_9$ | $R_{10}$ | $R_{11}$ | |
| | $h_{82}$ | | | | | | | | $R_8$ | $R_9$ | $R_{10}$ | $R_{11}$ | $R_{12}$ |
| $S_5$ | $h_{12}$ | $R_1$ | $R_2$ | $R_3$ | $R_4$ | $R_5$ | | | | | | | |
| | $h_{52}$ | | | | | $R_5$ | $R_6$ | $R_7$ | $R_8$ | $R_9$ | | | |

**FIG.8**

| SHARE | TAGS | SHAREHOLDER 3 RIGHTS PROFILES | | | | | | | | | | | |
|---|---|---|---|---|---|---|---|---|---|---|---|---|---|
| $S_4$ | $h = h_{23} = h_{73}$ | | $R_2$ | $R_3$ | $R_4$ | $R_5$ | $R_6$ | $R_7$ | $R_8$ | $R_9$ | $R_{10}$ | $R_{11}$ | |
| $S_5$ | $h_{43}$ | | | | $R_4$ | $R_5$ | $R_6$ | $R_7$ | $R_8$ | | | | |
| | $h_{63}$ | | | | | | $R_6$ | $R_7$ | $R_8$ | $R_9$ | $R_{10}$ | | |
| $S_6$ | $h_{33}$ | | | $R_3$ | $R_4$ | $R_5$ | $R_6$ | $R_7$ | | | | | |
| $S_7$ | $h_{13}$ | $R_1$ | $R_2$ | $R_3$ | $R_4$ | $R_5$ | | | | | | | |
| | $h_{53}$ | | | | | $R_5$ | $R_6$ | $R_7$ | $R_8$ | $R_9$ | | | |
| | $h_{83}$ | | | | | | | | $R_8$ | $R_9$ | $R_{10}$ | $R_{11}$ | $R_{12}$ |

**FIG.9**

| SHARE | TAGS | SHAREHOLDER 4 RIGHTS PROFILES | | | | | | | | | | | |
|---|---|---|---|---|---|---|---|---|---|---|---|---|---|
| $S_5$ | $h_{14}$ | $R_1$ | $R_2$ | $R_3$ | $R_4$ | $R_5$ | | | | | | | |
| | $h_{54}$ | | | | | $R_5$ | $R_6$ | $R_7$ | $R_8$ | $R_9$ | | | |
| $S_6$ | $h_{24}$ | | $R_2$ | $R_3$ | $R_4$ | $R_5$ | $R_6$ | | | | | | |
| | $h_{74}$ | | | | | | | $R_7$ | $R_8$ | $R_9$ | $R_{10}$ | $R_{11}$ | |
| $S_7$ | $h = h_{44}$ | | | | $R_4$ | $R_5$ | $R_6$ | $R_7$ | $R_8$ | | | | |
| $S_8$ | $h_{34}$ | | | $R_3$ | $R_4$ | $R_5$ | $R_6$ | $R_7$ | | | | | |
| | $h_{64}$ | | | | | | $R_6$ | $R_7$ | $R_8$ | $R_9$ | $R_{10}$ | | |
| | $h_{84}$ | | | | | | | | $R_8$ | $R_9$ | $R_{10}$ | $R_{11}$ | $R_{12}$ |

**FIG.10**

| SHARE | TAGS | SHAREHOLDER 5 RIGHTS PROFILES | | | | | | | | | | | |
|---|---|---|---|---|---|---|---|---|---|---|---|---|---|
| $S_7$ | $h = h_{75}$ | | | | | | | $R_7$ | $R_8$ | $R_9$ | $R_{10}$ | $R_{11}$ | |
| $S_9$ | $h_{25}$ | | $R_2$ | $R_3$ | $R_4$ | $R_5$ | $R_6$ | | | | | | |
| | $h_{65}$ | | | | | | $R_6$ | $R_7$ | $R_8$ | $R_9$ | $R_{10}$ | | |
| | $h_{85}$ | | | | | | | | $R_8$ | $R_9$ | $R_{10}$ | $R_{11}$ | $R_{12}$ |
| $S_{10}$ | $h_{15}$ | $R_1$ | $R_2$ | $R_3$ | $R_4$ | $R_5$ | | | | | | | |
| | $h = h_{35} = h_{45}$ | | | $R_3$ | $R_4$ | $R_5$ | $R_6$ | $R_7$ | $R_8$ | | | | |
| | $h_{55}$ | | | | | $R_5$ | $R_6$ | $R_7$ | $R_8$ | $R_9$ | | | |

EP 1 288 830 A1

**FIG.11**

| USER 2, RIGHT 4 | SECRET SHARE | ID'D TAGS | | VERIF. TAG |
|---|---|---|---|---|
| SHAREHOLDER$_1$ | S$_1$ | h$_{21}$ | h$_{41}$ | h$_{21}$ |
| SHAREHOLDER$_2$ | S$_2$ | h$_{22}$ | h$_{32}$ | h$_{22}$ |
| SHAREHOLDER$_3$ | S$_4$ | $h = h_{23} = h_{73}$ | | h$_{23}$ |
| SHAREHOLDER$_4$ | S$_6$ | h$_{24}$ | - | h$_{24}$ |
| SHAREHOLDER$_5$ | S$_9$ | h$_{25}$ | - | h$_{25}$ |

**FIG.12**

| USER 7, RIGHT 4 | SECRET SHARE | ID'D TAGS | | VERIF. TAG |
|---|---|---|---|---|
| SHAREHOLDER$_1$ | S$_1$ | h$_{21}$ | h$_{41}$ | h$_{71}$ |
| SHAREHOLDER$_2$ | S$_3$ | $h = h_{42}$ | | h$_{72}$ |
| SHAREHOLDER$_3$ | S$_4$ | $h = h_{23} = h_{73}$ | | h$_{73}$ |
| SHAREHOLDER$_4$ | S$_6$ | h$_{24}$ | - | h$_{74}$ |
| SHAREHOLDER$_5$ | S$_7$ | - | - | h$_{75}$ |

EP 1 288 830 A1

**European Patent Office**

## DECLARATION

Application Number

which under Rule 45 of the European Patent Convention EP 02 25 5794
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter
excluded from patentability under Art.
52(2) and (3) EPC. Given that the claims
are formulated in terms of such subject
matter or merely specify commonplace
features relating to its technological
implementation, the search examiner could
not establish any technical problem which
might potentially have required an
inventive step to overcome. Hence it was
not possible to carry out a meaningful
search into the state of the art (Rule 45
EPC). See also Guidelines Part B Chapter
VIII, 1-6.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

| Place of search | Date | Examiner |
|---|---|---|
| THE HAGUE | 25 October 2002 | Dubois, G |

EPO FORM 1504 (P04C37)